# EUROPEAN PATENT SPECIFICATION

(11) **EP 2 003 020 B1**
(45) Date of publication and mention of the grant of the patent: **15.08.2012**
(21) Application number: 08010157.9
(22) Date of filing: 04.06.2008
(51) Int. Cl.: B60R 1/04, B60R 1/08

(54) **Security rear-view mirror for the opening of the vehicle rear door**
Sicherheitsrückspiegel zum Öffnen der Fahrzeughintertür
Rétroviseur de sécurité pour l'ouverture de la porte arrière d'un véhicule

(30) Priority: 04.06.2007 ES 200701197 U
(43) Date of publication of application: 17.12.2008
(73) Proprietor: Ros Santasusana, Luis, 08006 Barcelona (ES)
(72) Inventor: Ros Santasusana, Luis, 08006 Barcelona (ES)
(74) Representative: Isern-Jara, Jaime

(56) References cited:
- CA-A1- 2 558 714
- DE-U1-202006 012 846
- US-A- 1 567 169
- US-A1- 2005 063 080
- US-B1- 6 710 710
- US-B1- 6 758 510

## Description

### Object of the invention

The present invention relates to a security rear-view mirror for the opening of the vehicle rear door.

### Field of the Invention

Is the manufacture of vehicle accessories and complements, and especially of security parts for use in said vehicles.

### Background of the Invention

It is known that during careless opening of a vehicle rear door, approaching of another vehicle can occur (for example of a motorcycle or a bicycle, etc.), so there is no time to close the door or to reduce the speed of the approaching vehicle. Such situation can cause a possible accident.

US-B1-6,710,710 discloses a rear-view mirror set to show the outer, side and back area of a car during the opening of a rear door, consisting in a rigid body with a reflective side defining a mirror which is fitted to the rear car door. No mention is made about fitting the mirror inside the vehicle at the B-pillars, just stating that it is fitted to the interior of the rear door.

DE 20 2006 012846 describes a rigid frame designed to be attached to a front seat of a car and bearing two mirrors orientated in respective directions. Mirrors can be manually moved through respective rotula mechanisms to get the best vision angle independently.

US-B1-6,758,510 shows a pillar trim component with an integrated rear-view mirror apt to be attached to a front A pillar of a vehicle. A housing for a mirror movably mounted and rotatable about a first axis and a reflective element movably mounted about a second axis are provided.

US-2005/0063080 A1 discloses an interior blind spot mirror with an u-shaped mounting box for driver or driver's side use. No mention is made about rear doors or placing nor integrating the spot mirror directly at the inner and rear side of the B-pillars.

### Brief description of the invention

The invention relates to a device being arranged inside of a car (such as a sedan type) and more specifically next to the join areas of each rear door, which allows to check whether the opening of these is safely verified before possible incidents with other vehicles at the rear and side section of the same.

Said device consists in a rear-view mirror which can be preferably mounted on each of the intermediate B-pillars of the body of a car. This way the user leaving the car through a rear door is able to perceive the possible approach of other car and in such situation to delay the opening of the door of interest.

In order to facilitate the explanation of the invention, embodiments of a security rear-view mirror for the opening of the vehicle rear door according to the appended claims will now be described by way of non-restrictive examples and with reference to the accompanying drawings.

### Brief description of the drawings

The figures 1 and 2 show the installation of a new rear-view mirror in two different ways onto the inner right B-pillar of the vehicle.

The figures 3 and 4 show other form of a rear-view mirror of the described type, arranged on the same right B-pillar of the vehicle.

The figure 5 shows the way of mounting of a rear-view mirror, in a particular case, having the form of the B-pillar surface.

### Detailed description of the invention

The elements designated with numerical indications from the drawings correspond to the following parts.

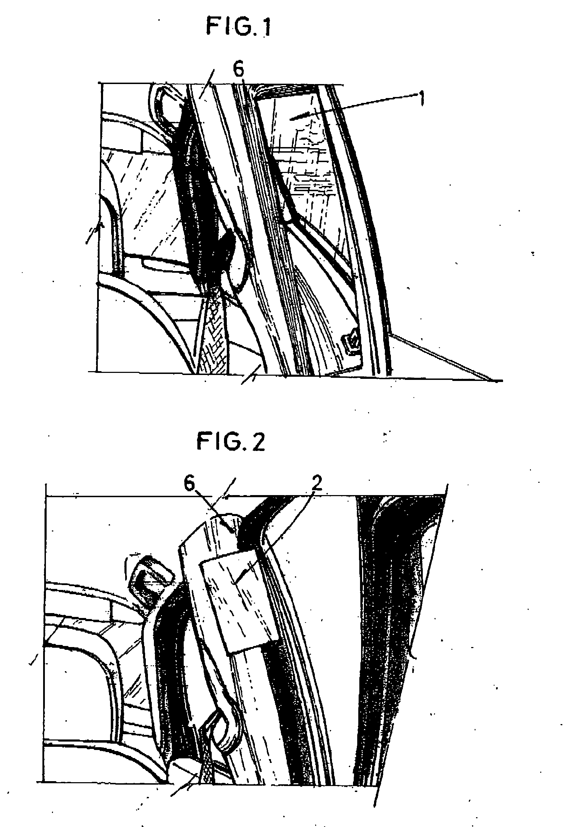

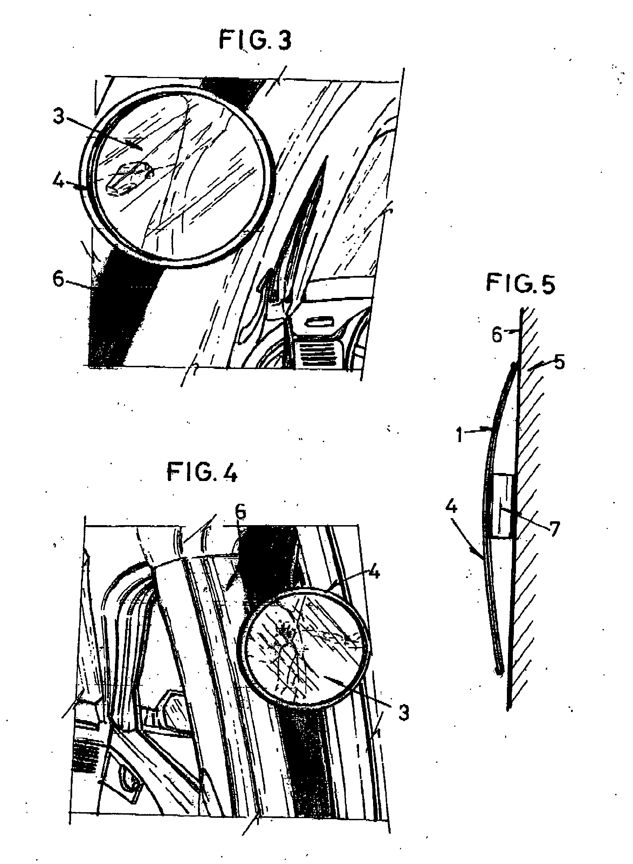

The new rear-view mirror consists in a convex or flat mirror, set to reflect a large area of the rear and external sides of the vehicle. It can have oval or rectangular, significantly elongated (1, figure 1) or less elongated regular shape (2, figure 2) or just circular shape (3, figures 3 and 4), and comprise an outer frame 4, like in said circular version, or lack it, like it has been shown on the figures 1 and 2.

Assembly of the rear-view mirror can be carried out on each of the B-pillars (5 and 6) of the body of a car and more specifically in its inner and rear parts, where normally there exists a covering moulding 6, which can be either of a regular form having flat and aligned inner surface or of an irregular form having the surface with reliefs or differentiate areas.

Fastening of the rear-view mirror is carried out depending on the type of the moulding finish covering the B-pillar of interest.

In case of a regular moulding, fastening can be carried out by means of a self-adhesive sheet on its both sides: one of them applied to the back of the mirror and the other one on the B-pillar moulding surface. It can also be used a fastening sheet of a Velcro type or similar.

In case of an irregular moulding, there can be used an element 7 arranged between the mirror and the B-pillar, consisting of a block made of a rigid or semi-rigid material, having its both sides provided, respectively, with one self-adhesive material, a Velcro system or similar.

Assembly system as described above allows to place the rear-view mirror in the most convenient site of the pillar and logically it does not affect the opening and closing of the door of interest.

It is understood that geometric form, dimensions and materials of the described device can be selected from any convenient ones depending on each type and model of the vehicle.

The device of the mirror can be integrated or form a part of the moulding of the inner side (6) of each of the B-pillars (5) of the body of a vehicle.

## Claims

1. Security rear-view mirror for the opening of a vehicle rear door, set to show the outer, side and back area of the car while proceeding with the opening of a rear door, consisting in a rigid body (1) preferably having laminar wharped shape and with one of its sides being reflective defining a mirror, convex or flat, **characterised in that** it is provided with a mounting for the moulding (6), having regular that surface, of the rear and inner B-pillars (5) of the vehicle, the mounting of the body (1) consists in a laminar element self-adhesive on its both sides, a moulding having an irregular surface, of the corresponding B-pillar (5) a block (7) made of a semi-rigid material having both of its sides covered by a self-adhesive material, facilitates its application onto the moulding (6),
the mirror, can be integrated or form part of the moulding (6) of the inner side of each of the side B-pillars (5) of the body of a vehicle.

2. Having regular that surface, according to claim 1, **characterized in that** said device shows regular geometric shape, such as rectangular (1, 2) and circular (3), having an outer frame (4), and non-functional side on its back provided with the mounting means for a moulding (6) associated with the inner pillar (5) of the vehicle.

3. Having regular that surface, according to claim 2, **characterized in that** the mounting means of the body (1) to the inner pillar of the vehicle preferably consist in a laminar element self-adhesive on its both sides and of reversible use.

4. Having regular that surface, according to claim 2, **characterized in that** the mounting means of the body (1) to the inner pillar (5) of the vehicle consist in a block (7) made of a semi-rigid material having both of its sides covered by a self-adhesive material, set for its application onto a moulding (6), having irregular surface, of the corresponding pillar (5).

## Patentansprüche

1. Sicherheits- Rückblickspiegel beim Öffnen der Hintertür eines Fahrzeugs, und der dazu dient, den äußeren Bereich hinter des Fahrzeugs zu zeigen, während man eine Hintertür öffnet, bestehend aus einer starren Einheit (1), vorzugsweise mit einer laminaren gebogenen Form, wovon eine Seite reflektierend ist und einen konvexen oder flachen Spiegel bildet, **dadurch gekennzeichnet, dass** sie über eine Halterung für das Formteil (6) mit regelmäßiger und ebener Fläche der hinteren Innenseite der B-Säulen (5) des Fahrzeugs, wobei die Befestigung der Einheit (1) aus einem laminaren, auf beiden Seiten selbstklebenden Element besteht, und bei einem Formteil der jeweiligen B-Säule, (5), das eine unregelmäßige Oberfläche aufweist, über einen Block (7) aus einem halbstarren Werkstoff verfügt, dessen beide Seiten mit einem selbstklebenden Material beschichtet sind, was seine Anwendung am Formteil (6) erleichtert, und wobei der Spiegel in das Formtell (6) der Innenseite der B-Säulen (5) der Fahrzeugkarosserie integriert und Teil davon sein kann.

2. Mit einer regelmäßig ebenen Oberfläche gemäß Anspruch 1, **dadurch gekennzeichnet, dass** diese Vorrichtung eine regelmäßige geometrische Form aufweist, wie z. B. rechteckig (1, 2) und rund (3), über einen äußeren Rahmen (4) und auf der nicht funktionellen Rückseite über die Befestigungsmittel Formteil (6) an der Innenseite der B-Säule (5) verfügt.

3. Mit einer regelmäßig ebenen Oberfläche gemäß Anspruch 2, **dadurch gekennzeichnet, dass** die Befestigungsmittel der Einheit (1) zur Innenseite der Säule des Fahrzeugs vorzugsweise aus einem laminaren selbstklebenden Element auf seinen beiden Seiten mit umkehrbarer Verwendung besteht.

4. Mit einer regelmäßig ebenen Oberfläche gemäß Anspruch 2, **dadurch gekennzeichnet, dass** die Befestigungsmittel der Einheit (1) zur Innenseite der B-Säule (5) des Fahrzeugs aus einem Block (7) aus einem aus einem halbstarren Werkstoff bestehen, der zur Anwendung an einem Formteil (6) der jeweiligen B-Säule (5) mit unregelmäßiger Oberfläche vorgesehen ist.

## Revendications

1. Rétroviseur de sécurité pour l'ouverture d'une porte arrière de véhicule, prévu pour voir la partie arrière latérale extérieure de la voiture lors de l'ouverture d'une porte arrière, consistant en un corps rigide (1) de préférence de forme voilée et laminaire et dont l'un des côtés est réfléchissant définissant un miroir, convexe ou plat, **caractérisé en ce qu'**il comprend un dispositif de montage pour la moulure (6), ayant une surface plate régulière, des montants latéraux (5) arrières et intérieurs du véhicule, la moulure du corps (1) consiste en un élément laminaire autoadhésif des deux côtés, une moulure ayant une surface irrégulière, du montant latéral (5) correspondant un bloc (7) fait en matériau semi-rigide, ayant ses deux côtés recouverts d'un matériau autoadhésif, facilite son application sur la moulure (6), le rétroviseur peut être intégré ou faire partie de la moulure (6) du côté intérieur de chacun des montants latéraux (5) du corps d'un véhicule.

2. Ayant une surface plate régulière, conformément à la revendication 1, **caractérisé en ce que** ledit dispositif a une forme géométrique régulière, comme rectangulaire (1, 2) et circulaire (3), avec un cadre extérieur (4), et le côté non fonctionnel de sa partie arrière ayant les moyens de montage pour une moulure (6) associée avec le montant intérieur (5) du véhicule.

3. Ayant une surface plate régulière, conformément à la revendication 2, **caractérisé en ce que** ledit dispositif de montage du corps (1) sur le montant intérieur du véhicule consiste de préférence en un élément autoadhésif laminaire de ses deux côtés à utilisation réversible.

4. Ayant une surface plate régulière, conformément à la revendication 2, **caractérisé en ce que** ledit dispositif de montage du corps (1) sur le montant intérieur (5) du véhicule consiste en un bloc (7) fait en matériau semi-rigide dont les deux côtés sont recouverts d'un matériau autoadhésif, prévu pour son application sur une moulure (6), ayant une surface irrégulière, sur le montant (5) correspondant.
